# EUROPÄISCHE PATENTSCHRIFT

(11) **EP 3 722 084 B1**
(45) Veröffentlichungstag und Bekanntmachung des Hinweises auf die Patenterteilung: **06.09.2023**
(21) Anmeldenummer: 20159169.0
(22) Anmeldetag: 25.02.2020
(51) Int. Cl.: B29D 30/00, B60C 23/04

(54) **VERFAHREN ZUR ANBRINGUNG EINER ELEKTROMAGNETISCHEN SENDE- UND EMPFANGSVORRICHTUNG IN EINEN REIFEN**
METHOD OF APPLYING AN ELECTROMAGNETIC TRANSMITTING AND RECEIVING DEVICE IN A TIRE
PROCÉDÉ DE FIXATION D'UN DISPOSITIF ÉMETTEUR ET RÉCEPTEUR ÉLECTROMAGNÉTIQUE DANS UN PNEUMATIQUE

(30) Priorität: 12.04.2019 DE 102019205292
(43) Veröffentlichungstag der Anmeldung: 14.10.2020
(73) Patentinhaber: Continental Reifen Deutschland GmbH, 30165 Hannover (DE)
(72) Erfinder: Mosko, Martin, 30419 Hannover (DE); Belobrad, Juraj, 30419 Hannover (DE)
(74) Vertreter: Continental Corporation

(56) Entgegenhaltungen:
- EP-A1- 3 196 056
- EP-A2- 1 318 032
- WO-A1-2018/224193

## Beschreibung

Die Erfindung bezieht sich auf ein Verfahren zur Anbringung einer elektromagnetischen Sende- und Empfangsvorrichtung.

Die Erfindung geht aus von einem Verfahren zur Anbringung einer elektromagnetischen Sende- und Empfangsvorrichtung in einen Reifen, aufweisend den folgenden Schritt:
Bereitstellen eines Reifenrohlings, wobei der Reifenrohling einen Einbringungsbereich aufweist, wobei der Einbringungsbereich zur Aufnahme einer elektromagnetischen Sende- und Empfangsvorrichtung vorgesehen ist.

Aus dem Stand der Technik sind Verfahren zur Anbringung einer elektromagnetischen Sende- und Empfangsvorrichtung in einen Reifen bekannt.

Bei den aus dem Stand der Technik bekannten Verfahren zur Anbringung einer elektromagnetischen Sende- und Empfangsvorrichtung in einen Reifen könnte es erforderlich sein, die elektromagnetische Sende- und Empfangsvorrichtung mit einer Gummiummantelung zu versehen, bevor die elektromagnetische Sende- und Empfangsvorrichtung in den Einbringungsbereich des Reifens eingebracht wird.

Insbesondere ist aus der WO2018/224193A1 ein Reifen mit einer angebrachten elektromagnetischen Sende- und Empfangsvorrichtung bekannt. Aus der EP1318032A2 ist ein Verfahren zur Herstellung eines Fahrzeugreifens mit einer Transpondereinheit bekannt. Weiterhin ist aus der EP3196056A1 der Einsatz eines Transponders in einem Reifen bekannt.

Die Gummiummantelung könnte erforderlich sein, um eine zuverlässige Anbindung der elektromagnetischen Sende- und Empfangsvorrichtung an das Material im Reifen sicherzustellen. Die Anbringung der Ummantelung an der elektromagnetischen Sende- und Empfangsvorrichtung könnte mit einem erhöhten Aufwand einhergehen.

Der Erfindung liegt die Aufgabe zugrunde, ein verbessertes Verfahren bereitzustellen, wobei das Verfahren mit einem geringeren Aufwand einhergeht.

Gelöst wird die Aufgabe durch das Verfahren nach Anspruch 1, wobei das Verfahren folgende Schritte aufweist:
- Erhitzen des Einbringungsbereichs des Reifenrohlings auf eine Temperatur von mindestens 50°C bis 200°C;
- Bereitstellen einer elektromagnetischen Sende- und Empfangsvorrichtung;
- Einbringen der elektromagnetischen Sende- und Empfangsvorrichtung in den erhitzten Einbringungsbereich des Reifenrohlings;
- Vulkanisieren des Reifenrohlings.

Durch den erfindungsgemäßen Umstand, wonach das Verfahren zur Herstellung einer elektromagnetischen Sende- und Empfangsvorrichtung die folgenden Schritte aufweist:
- Erhitzen des Einbringungsbereichs des Reifenrohlings auf eine Temperatur von mindestens 50°C bis 200°C;
- Bereitstellen einer elektromagnetischen Sende- und Empfangsvorrichtung;
- Einbringen der elektromagnetischen Sende- und Empfangsvorrichtung in den erhitzten Einbringungsbereich des Reifenrohlings;
- Vulkanisieren des Reifenrohlings,
wird ein Verfahren angewendet, bei dem durch die Erhitzung des Einbringungsbereichs die elektromagnetische Sende- und Empfangsvorrichtung zuverlässig in dem Material des Reifens angeordnet werden kann. Ein Ummanteln der elektromagnetischen Sende- und Empfangsvorrichtung mit einem Gummimaterial ist dann nicht mehr erforderlich. Da das Ummanteln nicht mehr erforderlich ist, kann Material eingespart werden und das Verfahren selbst einfacher gestaltet werden. Bei dem eingesparten Material handelt es sich um das Gummimaterial zur Ummantelung der elektromagnetischen Sende- und Empfangsvorrichtung.

Somit wird ein verbessertes Verfahren bereitgestellt.

Bei der elektromagnetischen Sende- und Empfangsvorrichtung handelt es sich insbesondere um eine RFID-Vorrichtung. RFID steht für Radio Frequency Identification und dies bedeutet Identifizierung mittels elektromagnetischer Wellen. Die elektromagnetische Sende- und Empfangsvorrichtung ist zu einem Speichern von Informationen über einen Reifen geeignet. Die elektromagnetische Sende- und Empfangsvorrichtung ist zu einer passiven oder aktiven Auslesung mittels eines externen Lesegerätes geeignet.

Die vorliegende Beschreibung bezieht sich somit auf einen Reifen oder einen Reifenrohling, wobei der Reifen beziehungsweise der Reifenrohling eine elektromagnetische Sende- und Empfangsvorrichtung aufweist, die mittels eines erfindungsgemäßen Verfahrens in einen Einbringungsbereich des Reifens beziehungsweise des Reifenrohlings eingebracht worden ist.

Bei dem Einbringungsbereich kann es sich um einen beliebigen Teil des Reifens beziehungsweise des Reifenrohlings oder um den gesamten Reifen beziehungsweise des gesamten Reifenrohling oder um einen Apex des Reifens beziehungsweise des Reifenrohlings handeln. Der Apex des Reifens beziehungsweise des Reifenrohlings steht insbesondere in direktem Kontakt mit einem Wulstkern des Reifens beziehungsweise des Reifenrohlings.

Bei dem Reifen handelt es sich insbesondere um einen PKW-Reifen, um einen LKW-Reifen oder um einen Fahrrad- Fahrzeugluftreifen.

Weitere vorteilhafte Ausgestaltungsformen der vorliegenden Erfindung sind Gegenstand der Unteransprüche.

Gemäß einer vorzugsweisen Ausgestaltungsform der Erfindung wird der Einbringungsbereich des Reifenrohlings vor dem Einbringen der erhitzten elektromagnetischen Sende- und Empfangsvorrichtung in den Einbringungsbereich des Reifenrohlings mittels einer Gebläsevorrichtung oder mittels einer Infrarotlampe oder mittels eines Lasers erhitzt wird.

Dabei kann der Einbringungsbereich des Reifenrohlings vor dem Einbringen der erhitzten elektromagnetischen Sende- und Empfangsvorrichtung in den Einbringungsbereich des Reifenrohlings mittels der der Gebläsevorrichtung mit Luft oder einem Inertgas erhitzt werden. Die Luft oder das Inertgas haben eine Temperatur von mindestens 50°C bis 200° C. Bei dem Inertgas kann es sich beispielsweise um CO2, um Nitrogengas oder um Argongas handeln.

Durch den erfindungsgemäßen Umstand, wonach der Einbringungsbereich des Reifenrohlings vor dem Einbringen der erhitzten elektromagnetischen Sende- und Empfangsvorrichtung in den Einbringungsbereich des Reifenrohlings mittels einer Gebläsevorrichtung oder mittels einer Infrarotlampe oder mittels eines Lasers erhitzt wird, kann eine genaue und effiziente Erhitzung des Einbringungsbereichs ermöglicht werden.

Gemäß einer nächsten vorzugsweisen Ausgestaltungsform der Erfindung wird die elektromagnetische Sende- und Empfangsvorrichtung vor dem Einbringen in den Einbringungsbereich des Reifenrohlings auf eine Temperatur auf eine Oberflächentemperatur der elektromagnetischen Sende- und Empfangsvorrichtung von mindestens 50° C bis 200° C erhitzt.

Die elektromagnetische Sende- und Empfangsvorrichtung ist insbesondere aus einem Gehäuse und aus elektronischen Komponenten ausgebildet. Die elektronischen Komponenten können zum Senden und Empfangen elektromagnetischer Signale und zum Speichern von Informationen vorgesehen sein. Die elektronischen Komponenten sind teilweise oder vollständig innerhalb des Gehäuses angeordnet. Das Gehäuse ist insbesondere aus einem Metall oder einem Kunststoff ausgebildet. Das Gehäuse weist eine Außenfläche auf die von dem Gehäuse weg orientiert ist. Bei der Oberflächentemperatur der elektromagnetischen Sende- und Empfangsvorrichtung handelt es sich insbesondere um die Temperatur dieser Außenfläche des Gehäuses.

Gemäß einer nächsten vorzugsweisen Ausgestaltungsform der Erfindung wird die elektromagnetische Sende- und Empfangsvorrichtung vor dem Einbringen in den Einbringungsbereich des Reifenrohlings mittels einer Gebläsevorrichtung oder mittels einer Infrarotlampe oder mittels eines Lasers erhitzt.

Dabei kann die elektromagnetische Sende- und Empfangsvorrichtung vor dem Einbringen in den Einbringungsbereich des Reifenrohlings mittels der der Gebläsevorrichtung mit Luft oder einem Inertgas erhitzt werden. Die Luft oder das Inertgas haben eine Temperatur von mindestens 50°C bis 200° C.

Gemäß einer nächsten vorzugsweisen Ausgestaltungsform der Erfindung wird die elektromagnetische Sende- und Empfangsvorrichtung mittels eines Heißluftstroms der Gebläsevorrichtung in den Einbringungsbereich des Reifenrohlings eingepresst oder mittels einer Vorrichtung die die Infrarotlampe aufweist in den Einbringungsbereich des Reifenrohlings eingepresst oder mittels einer Vorrichtung die den Laser aufweist in den Einbringungsbereich des Reifenrohlings eingepresst.

Gemäß einer nächsten vorzugsweisen Ausgestaltungsform der Erfindung wird die elektromagnetische Sende- und Empfangsvorrichtung mittels eines Heißgasstroms der Gebläsevorrichtung in den Einbringungsbereich des Reifenrohlings eingepresst.

Gemäß einer nächsten vorzugsweisen Ausgestaltungsform der Erfindung wird die erhitzte elektromagnetische Sende- und Empfangsvorrichtung mit einem Druck von 0,01MPa bis 1MPa in den Einbringungsbereich des Reifenrohlings eingedrückt.

Durch den erfindungsgemäßen Umstand, wonach die erhitzte elektromagnetische Sende- und Empfangsvorrichtung mit einem Druck von 0,01MPa bis 1MPa in den Einbringungsbereich des Reifenrohlings eingedrückt wird, kann eine zuverlässige Anordnung und Anbringung der elektromagnetischen Sende- und Empfangsvorrichtung im Einbringungsbereich sichergestellt werden.

Gemäß einer nächsten vorzugsweisen Ausgestaltungsform der Erfindung handelt es sich bei dem Einbringungsbereich des Reifenrohlings um den Apex des Reifenrohlings.

Weitere Merkmale, Vorteile und Einzelheiten, auf die die Erfindung in ihrem Umfang aber nicht beschränkt ist, werden nun anhand der Zeichnung näher beschrieben.

Es zeigt:

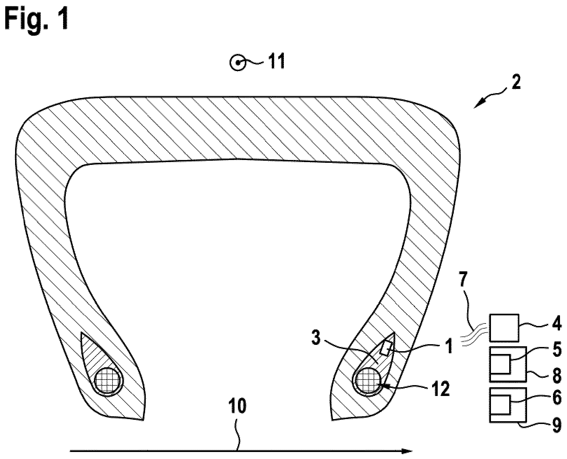

Fig. 1: Eine schematische Darstellung eines Reifenrohlings in den mittels eines erfindungsgemäßen Verfahrens eine elektromagnetische Sende- und Empfangsvorrichtung eingebracht worden ist.

In der Figur 1 ist ein Reifenrohling 2 schematisch in Radialschnittansicht dargestellt. Der Reifenrohling 2 ist um eine Rotationsachse 10 in eine Umlaufrichtung 11 rotierbar.

In einen Einbringungsbereich 3 des Reifenrohlings 2 ist über ein erfindungsgemäßes Verfahren eine elektromagnetische Sende- und Empfangsvorrichtung 1 eingebracht worden.

Gemäß der Darstellung in der Figur 1 handelt es sich bei dem Einbringungsbereich 3 um einen Apex des Reifenrohlings 2. Der Apex liegt neben einem Wulstkern 12 des Reifenrohlings 2.

Erfindungsgemäß ist der Einbringungsbereichs 3 des Reifenrohlings 2 auf eine Temperatur von mindestens 50°C bis 200°C erhitzt worden, bevor die elektromagnetische Sende- und Empfangsvorrichtung 1 in den erhitzten Einbringungsbereich 3 des Reifenrohlings 2 eingebracht worden ist.

Der Reifenrohling 2 kann zu einem vulkanisiertem Reifen 2 vulkanisiert werden.

Der Einbringungsbereich 3 des Reifenrohlings 2 kann vor dem Einbringen der erhitzten elektromagnetischen Sende- und Empfangsvorrichtung 1 in den Einbringungsbereich 3 des Reifenrohlings 2 mittels einer Gebläsevorrichtung 4 oder mittels einer Infrarotlampe 5 oder mittels eines Lasers 6 erhitzt worden sein.

Die elektromagnetische Sende- und Empfangsvorrichtung 1 kann mittels eines Heißluftstroms 7 der Gebläsevorrichtung 4 in den Einbringungsbereich 3 des Reifenrohlings 2 eingepresst worden sein und/oder mittels einer Vorrichtung 8 die die Infrarotlampe 5 aufweist in den Einbringungsbereich 3 des Reifenrohlings 2 eingepresst worden sein und/oder mittels einer Vorrichtung 9 die den Laser 6 aufweist in den Einbringungsbereich 3 des Reifenrohlings 2 eingepresst worden sein.

### Bezugszeichenliste

(ist Teil der Beschreibung)
- 1: Elektromagnetische Sende- und Empfangsvorrichtung
- 2: Reifen / Reifenrohling
- 3: Einbringungsbereich
- 4: Gebläsevorrichtung
- 5: Infrarotlampe
- 6: Laser
- 7: Heißluftstrom
- 8: Vorrichtung die die Infrarotlampe aufweist
- 9: Vorrichtung die den Laser aufweist
- 10: Rotationsachse
- 11: Umlaufrichtung
- 12: Wulstkern

## Patentansprüche

1. Verfahren zur Anbringung einer elektromagnetischen Sende- und Empfangsvorrichtung (1) in einen Reifen (2), aufweisend einen der folgenden Schritte:
- Bereitstellen eines Reifenrohlings (2), wobei der Reifenrohling (2) einen Einbringungsbereich (3) aufweist, wobei der Einbringungsbereich (3) zur Aufnahme einer elektromagnetischen Sende- und Empfangsvorrichtung (1) vorgesehen ist;
- Erhitzen des Einbringungsbereichs (3) des Reifenrohlings (2) auf eine Temperatur von mindestens 50°C bis 200°C;
- Bereitstellen einer elektromagnetischen Sende- und Empfangsvorrichtung (1);
- Einbringen der elektromagnetischen Sende- und Empfangsvorrichtung (1) in den erhitzten Einbringungsbereich (3) des Reifenrohlings (2);
- Vulkanisieren des Reifenrohlings (2).

2. Verfahren nach Anspruch 1, **dadurch gekennzeichnet, dass** der Einbringungsbereich (3) des Reifenrohlings (2) vor dem Einbringen der erhitzten elektromagnetischen Sende- und Empfangsvorrichtung (1) in den Einbringungsbereich (3) des Reifenrohlings (2) mittels einer Gebläsevorrichtung (4) oder mittels einer Infrarotlampe (5) oder mittels eines Lasers (6) erhitzt wird.

3. Verfahren nach Anspruch 1 oder 2, wobei die elektromagnetische Sende- und Empfangsvorrichtung (1) vor dem Einbringen in den Einbringungsbereich (3) des Reifenrohlings (2) auf eine Temperatur auf eine Oberflächentemperatur der elektromagnetischen Sende- und Empfangsvorrichtung (1) von mindestens 50° C bis 200° C erhitzt wird.

4. Verfahren nach dem vorhergehenden Anspruch, **dadurch gekennzeichnet, dass** die elektromagnetische Sende- und Empfangsvorrichtung (1) vor dem Einbringen in den Einbringungsbereich (3) des Reifenrohlings (2) mittels einer Gebläsevorrichtung (4) oder mittels einer Infrarotlampe (5) oder mittels eines Lasers (6) erhitzt wird.

5. Verfahren nach dem vorhergehenden Anspruch, **dadurch gekennzeichnet, dass** die elektromagnetische Sende- und Empfangsvorrichtung (1) mittels eines Heißluftstroms (7) der Gebläsevorrichtung (4) in den Einbringungsbereich (3) des Reifenrohlings (2) eingepresst wird oder mittels einer Vorrichtung (8) die die Infrarotlampe (5) aufweist in den Einbringungsbereich (3) des Reifenrohlings (2) eingepresst wird oder mittels einer Vorrichtung (9) die den Laser (6) aufweist in den Einbringungsbereich (3) des Reifenrohlings (2) eingepresst wird.

6. Verfahren nach einem der vorhergehenden Ansprüche, **dadurch gekennzeichnet, dass** die erhitzte elektromagnetische Sende- und Empfangsvorrichtung (1) mit einem Druck von 0,01MPa bis 1MPa in den Einbringungsbereich (3) des Reifenrohlings (2) eingedrückt wird.

7. Verfahren nach einem der vorhergehenden Ansprüche, **dadurch gekennzeichnet, dass** es sich bei dem Einbringungsbereich (3) des Reifenrohlings (2) um den Apex des Reifenrohlings (2) handelt.

## Claims

1. Method of applying an electromagnetic transmitting and receiving device (1) in a tyre (2), having one of the following steps:
- providing a tyre blank (2), the tyre blank (2) having an insertion area (3), the insertion area (3) being provided to receive an electromagnetic transmitting and receiving device (1);
- heating the insertion area (3) of the tyre blank (2) to a temperature of at least 50° C to 200° C;
- providing an electromagnetic transmitting and receiving device (1);
- inserting the electromagnetic transmitting and receiving device (1) into the heated insertion area (3) of the tyre blank (2);
- vulcanizing the tyre blank (2).

2. Method according to Claim 1, **characterized in that** before the insertion of the heated electromagnetic transmitting and receiving device (1) into the insertion area (3) of the tyre blank (2), the insertion area (3) of the tyre blank (2) is heated by means of a blower device (4) or by means of an infrared lamp (5) or by means of a laser (6).

3. Method according to Claim 1 or 2, wherein before the insertion into the insertion area (3) of the tyre blank (2), the electromagnetic transmitting and receiving device (1) is heated to a surface temperature of the electromagnetic transmitting and receiving device (1) of at least 50° C to 200° C.

4. Method according to the preceding claim, **characterized in that** before the insertion into the insertion area (3) of the tyre blank (2), the electromagnetic transmitting and receiving device (1) is heated by means of a blower device (4) or by means of an infrared lamp (5) or by means of a laser (6).

5. Method according to the preceding claim, **characterized in that** the electromagnetic transmitting and receiving device (1) is pressed into the insertion area (3) of the tyre blank (2) by means of a hot air stream (7) from the blower device (4) or is pressed into the insertion area (3) of the tyre blank (2) by means of a device (8) which has the infrared lamp (5) or is pressed into the insertion area (3) of the tyre blank (2) by means of a device (9) which has the laser (6).

6. Method according to one of the preceding claims, **characterized in that** the heated electromagnetic transmitting and receiving device (1) is pressed into the insertion area (3) of the tyre blank (2) with a pressure of 0.01 MPa to 1 MPa.

7. Method according to one of the preceding claims, **characterized in that** the insertion area (3) of the tyre blank (2) is the apex of the tyre blank (2).

## Revendications

1. Procédé permettant de fixer un dispositif émetteur et récepteur électromagnétique (1) dans un pneumatique (2), présentant l'une des étapes suivantes consistant à :
- fournir un pneumatique cru (2), le pneumatique cru (2) présentant une zone d'introduction (3), la zone d'introduction (3) étant prévue pour recevoir un dispositif émetteur et récepteur électromagnétique (1) ;
- chauffer la zone d'introduction (3) du pneumatique cru (2) à une température d'au moins 50 °C à 200 °C ;
- fournir un dispositif émetteur et récepteur électromagnétique (1) ;
- introduire le dispositif émetteur et récepteur électromagnétique (1) dans la zone d'introduction (3) chauffée du pneumatique cru (2) ;
- vulcaniser le pneumatique cru (2).

2. Procédé selon la revendication 1, **caractérisé en ce qu'**avant l'introduction du dispositif émetteur et récepteur électromagnétique (1) chauffé dans la zone d'introduction (3) du pneumatique cru (2), la zone d'introduction (3) du pneumatique cru (2) est chauffée au moyen d'un dispositif de soufflage (4) ou au moyen d'une lampe infrarouge (5) ou au moyen d'un laser (6).

3. Procédé selon la revendication 1 ou 2, dans lequel, avant l'introduction dans la zone d'introduction (3) du pneumatique cru (2), le dispositif émetteur et récepteur électromagnétique (1) est chauffé à une température de surface du dispositif émetteur et récepteur électromagnétique (1) d'au moins 50 °C à 200 °C.

4. Procédé selon la revendication précédente, **caractérisé en ce qu'**avant l'introduction dans la zone d'introduction (3) du pneumatique cru (2), le dispositif émetteur et récepteur électromagnétique (1) est chauffé au moyen d'un dispositif de soufflage (4) ou au moyen d'une lampe infrarouge (5) ou au moyen d'un laser (6).

5. Procédé selon la revendication précédente, **caractérisé en ce que** le dispositif émetteur et récepteur électromagnétique (1) est enfoncé au moyen d'un courant d'air chaud (7) du dispositif de soufflage (4) dans la zone d'introduction (3) du pneumatique cru (2), ou est enfoncé dans la zone d'introduction (3) du pneumatique cru (2) au moyen d'un dispositif (8) qui présente la lampe infrarouge (5), ou est enfoncé dans la zone d'introduction (3) du pneumatique cru (2) au moyen d'un dispositif (9) qui présente le laser (6).

6. Procédé selon l'une quelconque des revendications précédentes, **caractérisé en ce que** le dispositif émetteur et récepteur électromagnétique (1) chauffé est inséré à une pression de 0,01 MPa à 1 MPa dans la zone d'introduction (3) du pneumatique cru (2).

7. Procédé selon l'une quelconque des revendications précédentes, **caractérisé en ce que** la zone d'introduction (3) du pneumatique cru (2) est le sommet du pneumatique cru (2).
